# FASCICULE DE BREVET EUROPEEN

(11) **EP 1 433 633 B1**
(45) Date de publication et mention de la délivrance du brevet: **13.10.2010**
(21) Numéro de dépôt: 03364041.8
(22) Date de dépôt: 22.12.2003
(51) Int. Cl.: B60J 1/16, E05D 15/10

(54) **Dispositif d'obturation d'une baie ménagée dans un véhicule automobile, et véhicule correspondant**
Schliesseinrichtung einer Öffnung in einem Fahrzeug und zugehöriges Fahrzeug
Closing device of an opening in a vehicle and corresponding vehicle

(30) Priorité: 23.12.2002 FR 0216581
(43) Date de publication de la demande: 30.06.2004
(73) Titulaire: Advanced Comfort Systems France SAS - ACS France, 79302 Bressuire Cédex (FR)
(72) Inventeur: Devanne, Christophe, 79300 Chambroutet (FR)
(74) Mandataire: Bioret, Ludovic

(56) Documents cités:
- EP-A- 0 857 844

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile coulissante, susceptible de libérer ou de fermer une ouverture.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres est de rendre celle-ci mobile verticalement dans son propre plan, en la faisant pénétrer ou sortir du caisson ou de la garniture des portières latérales.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients. Les moyens d'actionnement et d'entraînement sont lourds, encombrants et complexes à monter. Les portes qui en résultent présentent en conséquence un volume important, nuisant au volume disponible à l'intérieur du véhicule (largeur aux coudes notamment).

Elles ont de plus un coût de fabrication élevé et posent classiquement des problèmes d'étanchéité. La maintenance est également complexe. Elles imposent en outre des contraintes sur le plan de l'esthétique et de l'ergonomie.

Une autre technique a été proposée par le titulaire de la présente demande de brevet. Cette technique est notamment décrite dans les documents de brevet EP - 0 778 168 et EP - 0 857 844 qui divulguent chacun les caractéristiques du préambule des revendications 1 et 19. Le dispositif d'obturation (appelé par la suite "baie flush") présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172. On résout ainsi la plupart des problèmes identifiés plus haut.

Sur le plan esthétique, la baie flush présente, vue de l'extérieur, un aspect lisse, affleurant, du fait qu'aucun cadre n'est nécessaire.

Le mouvement de la partie mobile peut être, par exemple, basculant ou coulissant. On décrit ci-après, rapidement, un exemple de ce dernier cas.

Pour assurer un coulissement de la partie mobile, constitué généralement par un panneau transparent, les moyens fonctionnels comprennent un dispositif de guidage comportant un premier et un second rails de guidage montés fixes sur l'ensemble fixe de la baie, de part et d'autre de l'ouverture fermée par le panneau mobile. Celui-ci est monté sur les rails, pour coulisser selon une direction longitudinale, dans un plan de coulissement entre une (ou plusieurs) position d'ouverture et une position intermédiaire de dégagement dans laquelle il est en regard de la baie et dégagé de celle-ci.

Selon une technique proposée, des moyens d'articulation assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie.

De telles articulations permettent ainsi au panneau mobile de passer du plan formé par l'ensemble fixe (position d'obturation) à un plan sensiblement parallèle de coulissement, et réciproquement.

L'invention se rapporte notamment à ce type de dispositif d'obturation, à ses variantes et ses perfectionnements. Ainsi, l'invention peut s'appliquer à tous les dispositifs d'obturation dont la cinématique d'ouverture et/ou de fermeture inclut un déplacement (y) entre une position d'ouverture et une position intermédiaire de dégagement, dans un plan parallèle au plan de l'ensemble fixe, et un déplacement (x) dans ce plan parallèle.

Cette clé de composition de mouvements de déplacement longitudinal et d'enchâssement transversal est particulièrement avantageuse, car elle permet une ouverture du panneau le long du véhicule (par exemple parallèlement au flanc de celui-ci) tout en assurant à la fermeture, un enchâssement du panneau dans la baie.

Dans le mode de réalisation décrit dans le brevet EP - 0 857 844, le panneau est manoeuvré à l'aide d'une poignée pouvant être fixée sur la partie inférieure du panneau. Plusieurs techniques ont été proposées pour réaliser et mettre en oeuvre cette poignée. Cependant, en général, les manoeuvres d'ouverture et de fermeture de ce type de dispositif d'obturation s'effectuent actuellement de façon manuelle.

L'automatisation, et donc la motorisation, des baies flush est bien sûr souhaitable, sinon nécessaire, pour équiper des véhicules modernes. Le principe de la motorisation a donc été envisagé. Cependant, aucune solution efficace n'a pour l'instant été proposée.

Une des raisons techniques à ce problème est que l'automatisation de la succession de déplacements (mouvement en x, puis en y) est beaucoup plus complexe que la mise en oeuvre d'un mouvement dans un seul plan, tel que cela est le cas lorsque la vitre pénètre dans la portière.

On est donc conduit à prévoir des moyens spécifiques pour effectuer chacun des mouvements en x et en y, ce qui conduit à des montages complexes, coûteux et encombrants, et donc inadaptés.

Le problème de l'encombrement (et du poids) est essentiel, dans le cas des baies flush : on ne peut pas dissimuler tout ou partie des moyens d'actionnement dans le caisson inférieur de la portière, que l'on souhaite conserver fermé. L'essentiel de la surface de la baie est donc visible, et il n'est pas envisageable que des moyens mécaniques (moteur, tringlerie, ...) soient apparents et/ou occupent une surface et un volume importants.

Par ailleurs, les baies doivent rester aisées à fabriquer, à livrer et à monter, ce qui est généralement peu compatible avec la notion d'automatisation.

On notera qu'il a été envisagé de combiner les deux mouvements, sous la forme d'un mouvement louvoyant, selon lequel le bord distal de la parie mobile se trouve, en fin de course, dans le plan de la baie (la partie mobile étant alors « en travers », entre le plan d'obturation et le plan de coulissement). Il suffit alors de ramener, manuellement, le bord proximal pour assurer l'obturation.

On n'obtient cependant pas une obturation complètement automatisée, à moins de prévoir des moyens complémentaires, ce qui ramène aux problèmes cités plus hauts.

L'invention ne vise cependant pas ce type de dispositifs à mouvement louvoyant, qui posent de nombreux problèmes, notamment en termes d'étanchéité et d'esthétique, du fait que le jeu entre le panneau mobile et l'ouverture dans l'ensemble fixe doit être important à l'arrière.

L'invention concerne donc les dispositifs dans lesquels la cinématique est décomposée en deux mouvements, le panneau mobile restant en permanence sensiblement parallèle « à lui-même », ou, plus exactement, au plan défini par la baie. En d'autres termes, le panneau mobile passe dans une pluralité de plans, tous sensiblement parallèles.

Le terme « sensiblement » signifie qu'il peut y avoir des jeux, des décalages ou des déplacements qui ne sont pas parfaitement rectilignes, du fait de la structure et de la forme de la baie et du véhicule, des matériaux, des tolérances, de l'usure, ... Il n'englobe pas en revanche le cas d'un panneau « en travers » dans un dispositif louvoyant.

On notera par ailleurs que le terme « plan » doit ici s'entendre dans une acception élargie : le plan formé par la baie est généralement courbe, selon une, voire deux, directions (cela peut justifier également, dans certains cas, le terme « sensiblement »).

L'invention a donc notamment pour objectif de pallier les inconvénients de l'art antérieur cités ci-dessus.

Plus précisément, l'invention a pour objectif de proposer un dispositif d'obturation d'une baie intégrant un panneau mobile, restant en permanence sensiblement parallèle au plan formé par la baie, et dont la manoeuvre est automatisée.

L'invention a également pour objectif de fournir un tel dispositif d'obturation d'une baie qui assure un enchâssement complet et simultané du panneau dans la baie lors d'une manoeuvre de fermeture.

L'invention a aussi pour objectif de fournir un tel dispositif d'obturation d'une baie, qui évite, ou à tout le moins limite les risques d'être ouvert de façon non autorisée.

L'invention a encore pour objectif de fournir un tel dispositif d'obturation d'une baie qui soit simple à réaliser, à monter sur une portière ou sur un véhicule, et qui permette une utilisation aisée et fiable.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

Ces objectifs, ainsi que d'autres qui apparaîtront par la suite, sont atteints à l'aide d'un dispositif d'obturation d'une baie ménagée dans la carrosserie d'un véhicule automobile, comprenant un ensemble fixe et un panneau mobile par rapport audit ensemble fixe, monté sur au moins un élément de support et/ou de guidage de façon à pouvoir coulisser selon un axe de coulissement, dans un plan de coulissement sensiblement parallèle au plan défini par ledit ensemble fixe, et pouvant venir obturer ou libérer une ouverture ménagée dans ledit ensemble fixe, ledit panneau mobile se plaçant dans ledit plan défini par ledit ensemble fixe, en position d'obturation. Selon l'invention, le dispositif comprend au moins un patin de coulissement circulant dans un rail formé dans un desdits éléments de support et/ou de guidage et présentant :
- une portion de coulissement sensiblement parallèle audit axe de coulissement ; et
- une portion d'obturation/ouverture formant un angle avec ladite portion de coulissement, de façon à commander le passage dudit panneau mobile dudit plan de coulissement vers ledit plan défini par le panneau fixe, et réciproquement,
ledit patin étant mobile en translation par rapport audit panneau mobile, de façon que, dans ladite portion d'obturation/ouverture, ledit panneau mobile reste immobile parallèlement audit axe de coulissement, pendant que ledit patin se décale parallèlement audit plan de coulissement, provoquant un déplacement dudit panneau mobile sensiblement perpendiculaire audit plan de coulissement.

Un rail de guidage présentant de telles portions successives permet de déplacer le panneau mobile entre sa position d'obturation (dans le plan formé par l'ensemble fixe) et sa position d'ouverture (dans un plan parallèle au plan d'obturation), et inversement, en le maintenant sensiblement parallèle au plan formé par l'ensemble fixe.

En d'autres termes, on évite de faire louvoyer le panneau mobile selon une cinématique telle que décrite précédemment (au cours de laquelle le panneau se retrouve « en travers »), les dispositifs à mouvement louvoyant posant notamment des problèmes d'étanchéité et d'esthétique.

Selon une solution préférée, ledit rail présente également une portion de verrouillage, s'étendant parallèlement à ladite portion de coulissement, dans le prolongement de ladite portion d'obturation/ouverture, dans laquelle ledit patin peut s'inscrire alors que ledit panneau mobile est en position d'obturation.

Dans ce cas, ledit patin est avantageusement solidarisé audit panneau par l'intermédiaire d'une coulisse s'étendant parallèlement à ladite portion de verrouillage et le long de laquelle il peut se déplacer entre deux butées.

Préférentiellement, le dispositif comprend des moyens de rappel tendant à ramener ledit patin vers ladite portion de coulissement, lesdits moyens de rappel comprenant avantageusement un ressort monté sur ladite tige.

Selon une solution préférée, au moins un desdits éléments de support et/ou de guidage porte au moins deux patins de coulissement.

Avantageusement, le dispositif comprend deux éléments de support et/ou de guidage portant chacun au moins un patin de coulissement.

Selon une autre caractéristique, le déplacement dudit panneau mobile est motorisé, des moyens de motorisation agissant avantageusement sur des moyens de transmission reliés à au moins un desdits patins.

Avantageusement, lesdits moyens de transmission appartiennent au groupe comprenant :
- les câbles ;
- les vis sans fin.

Préférentiellement, ladite vis sans fin est une vis souple.

Dans ce cas, ledit ou lesdits patins sont avantageusement solidarisés à ladite vis sans fin souple par l'intermédiaire d'une agrafe sertie.

Selon encore une autre caractéristique, lesdits moyens de motorisation sont uniques et assurer l'ensemble des déplacements desdits patins, lesdits moyens de motorisation étant préférentiellement solidarisés audit ensemble fixe.

Avantageusement, lesdits moyens de motorisation sont montés dans et/ou sur un desdits éléments de support et/ou de guidage.

Selon un mode de réalisation particulier, ledit ensemble fixe, ledit panneau mobile, le ou lesdits éléments de support et/ou de guidage, le ou lesdits patins, les moyens de motorisation éventuels sont assemblés pour former un tout prêt à être rapporter sur une porte ou la carrosserie d'un véhicule.

Préférentiellement, ledit panneau mobile porte un cadre prévu pour recevoir un joint d'étanchéité.

Avantageusement, ledit ensemble fixe est un panneau vitré.

L'invention concerne également les véhicules automobiles comprenant au moins un dispositif d'obturation tel que décrit ci-dessus.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 est une vue éclatée d'un dispositif d'obturation selon l'invention ;
- la figure 2 est une vue de détail d'une portion d'un rail mis en oeuvre dans le dispositif illustré par la figure 1 ;
- la figure 3 est une vue de détail des moyens de compensation intégrés au dispositif illustré par la figure 1 ;
- la figure 4 est une vue de détail des moyens d'entraînement intégrés au dispositif illustré par la figure 1.

Comme déjà indiqué, le principe général de l'invention repose notamment sur l'utilisation de moyens de coulissement et d'un rail spécifique pour le guidage des moyens de coulissement assurant d'une part le coulissement de la partie mobile, dans un plan d'ouverture, et d'autre part le passage du plan d'ouverture au plan d'obturation.

L'invention propose donc de mettre en oeuvre sélectivement des mouvements de coulissement et d'enchâssement. Ceci est obtenu notamment par la mise en oeuvre d'un principe nouveau des moyens de coulissement consistant à rendre ceux-ci mobiles par rapport au panneau mobile dont ils assurent le déplacement.

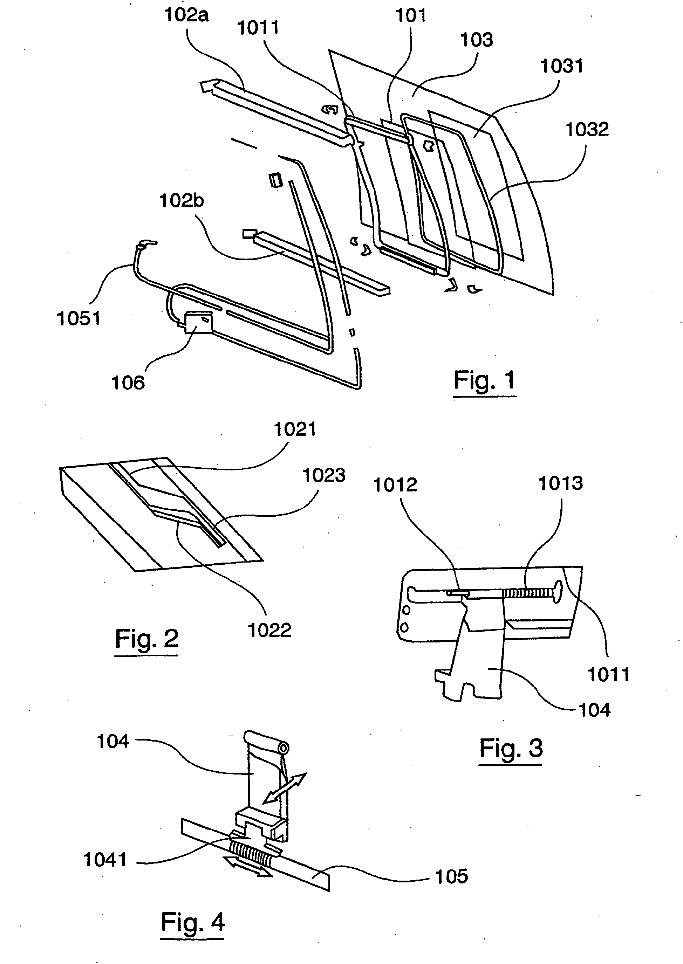

Selon le mode de réalisation de l'invention illustré par la figure 1, le dispositif d'obturation d'une baie comprend un panneau 101 coulissant, mobile le long de rails de guidage 102a, 102b, entre des positions d'obturation et d'ouverture d'une baie 1031 ménagée dans un élément fixe, en l'occurrence un panneau vitré, destiné à être rapporté sur la carrosserie d'un véhicule.

Le panneau 101 est solidaire d'un cadre 1011 sur lequel on prévoit de rapporter un joint d'étanchéité 1032.

Comme illustré par les figures 3 et 4, le panneau 101 est relié aux rails de guidage 102a et 102b par l'intermédiaire de patins de coulissement 104.

Ces patins de coulissement 104 sont montés chacun sur une agrafe 1041 sertie sur une vis sans fin souple 105 entraînée par un moto-réducteur 106.

La vis sans fin souple 105 est guidée par une gaine 1051 et traverse les rails 102a et 102b.

Comme cela apparaît sur la figure 2, les rails 102a et 102b présentent chacun une rainure présentant plusieurs portions successives :
- une portion de coulissement 1021 permettant le guidage en coulissement du panneau dans le plan d'ouverture, le long du panneau fixe 103 ;
- une portion d'obturation/ouverture 1022 formant rampe, permettant d'assurer le déplacement du panneau 101 d'une position où il est engagé dans la baie (position d'obturation) vers une position intermédiaire de dégagement (position dans le plan d'ouverture) où il est en regard de la baie et légèrement en retrait de celle-ci, et inversement ;
- une portion 1023 de verrouillage des patins de coulissement 104 dont le fonctionnement est explicité en détail par la suite.

On note que cette succession de portions 1021, 1022, 1023, est doublée sur chacun des rails 102a et 102b, de façon à assurer le guidage de deux patins espacés l'un de l'autre. Ainsi, le panneau 101 reste en permanence sensiblement parallèle au plan formé par l'élément fixe 103

Selon un autre mode de réalisation envisageable, la rampe 1022 permettant le passage du panneau mobile du plan d'obturation peut être unique, en étant sensiblement centré par rapport à l'ouverture ménagée dans la baie. Dans ce cas, une telle rampe est destinée à coopérer avec un patin porté par le panneau mobile et sensiblement centré par rapport à la longueur du panneau.

En référence à la figure 3, les patins 104 sont montés coulissant sur une tige 1012 portée par le cadre 1011 solidaire du panneau 101, un ressort 1013 étant monté à une extrémité de la tige 1012.

Ainsi, les patins 104 sont mobiles en translation par rapport au panneau 101.

Cette tige présente une longueur correspondant sensiblement à celle de la portion de stationnement 1023 des rails 102a et 102b, les extrémités de la tige formant butée mécanique pour les patins de coulissement 104.

Selon une caractéristique de l'invention, on assure la motorisation du déplacement de verrouillage/déverrouillage du panneau, et celui dans le plan d'ouverture à l'aide d'un moyen de motorisation unique.

Lors de la fermeture, les agrafes 1041 serties sur la vis souple 105 poussent sur les patins de coulissement 104 situés dans le rail inférieur et tirent sur les patins situés dans le rail supérieur, provoquant la translation du panneau 101 le long des rails 102a et 102b sur une longueur correspondant à la portion rainurée 1021.

Les patins 104 entrent ensuite dans la rampe 1022, provoquant le déplacement du panneau 101 selon une direction perpendiculaire au plan de coulissement, à l'issue duquel il est enchâssé dans l'élément fixe 103, avec lequel il affleure (le joint 1032 étant alors comprimé contre le cadre 1011 et l'élément fixe 103). Dans cette position, le panneau 101 est immobilisé.

Pendant ce déplacement d'obturation, le panneau 101 est immobilisé par une butée mécanique, tandis que les patins 104 se décalent par rapport au panneau en coulissant sur la tige 1012 et en étant guidés par la rampe 1022.

C'est donc le déplacement des patins 104 le long de cette portion 1022 qui va entraîner le déplacement du panneau dans une direction perpendiculaire au plan de coulissement, le déplacement du panneau dans le plan de coulissement étant bloqué.

Après le déplacement d'obturation, les patins 104 continuent leur déplacement, entraînés par les agrafes 1041, en étant guidés le long de la portion 1023 de stationnement. Au cours du déplacement des patins 104 dans la portion de stationnement 1023, le ressort 1013 se comprime.

On comprend que, les patins étant dans la portion 1023, le panneau est dans une situation d'inviolabilité. En effet, de l'extérieur du véhicule, il n'est pas possible de déplacer le panneau vers l'intérieur du véhicule (les patins étant en dehors de la rampe 1022), ni de le faire coulisser (celui-ci étant enchâssé dans l'élément fixe 103).

Lors de l'ouverture, les agrafes 1041 tirent sur les patins de coulissement situés dans le rail inférieur et poussent sur ceux situés dans le rail supérieur.

Dans un premier temps, le ressort 1013 se détend au fur et à mesure que le patin 104 coulisse dans la portion de stationnement 1023, le panneau mobile restant immobile en position d'obturation.

Les patins sont ensuite entraînés dans les rampes 1022 correspondantes, provoquant le déplacement d'ouverture du panneau vers l'intérieur du véhicule, les patins 104 continuant à coulisser sur la tige 1012 portée par le cadre jusqu'à venir en butée à l'extrémité de cette tige.

Une fois le panneau en position déverrouillée et les patins en butée, les patins son entraînés le long de la zone 1021 des rails 102a et 102b, provoquant le coulissement du panneau le long des rails, ceci jusqu'à une butée mécanique prévue sur l'ensemble fixe ou sur les rails eux-mêmes.

Selon un mode de réalisation préférentiel, la motorisation complète est pré-assemblée sur le dispositif puis elle est glissée entre le panneau extérieur de la carrosserie et la doublure intérieure.

De nombreuses variantes de réalisation et de nombreux perfectionnements sont envisageables, notamment en ce qui concerne la motorisation qui peut être commandée électroniquement pour gérer des impulsions, des vitesses de transfert variables, une fonction anti-pincement...

Les différents modes de réalisation de l'invention décrits ci-dessus ne sont bien sûr pas limitatifs de l'invention. D'autres modes de réalisation, ainsi que des variantes et des perfectionnements, sont envisageables.

En particulier, le décalage du panneau mobile peut être effectué tant vers l'intérieur du véhicule que vers l'extérieur du véhicule.

Par ailleurs, bien qu'un seul panneau mobile soit représenté, il est bien sûr possible d'en prévoir plusieurs.

## Revendications

1. Dispositif d'obturation d'une baie (10 31) ménagée dans la carrosserie d'un véhicule automobile, comprenant un ensemble fixe (103) et un panneau mobile (101) par rapport audit ensemble fixe (103), monté sur au moins un élément de support et/ou de guidage (102a, 102b) de façon à pouvoir coulisser selon un axe de coulissement dans un plan de coulissement sensiblement parallèle au plan défini par ledit ensemble fixe (103) et pouvant venir obturer ou libérer une ouverture ménagée dans ledit ensemble fixe (103), ledit panneau mobile (101) se plaçant en position d'obturation, dans ledit plan défini par ledit ensemble fixe (103)
**caractérisé en ce qu'**il comprend au moins un patin de coulissement (104) circulant dans un rail (102a, 102b) formé dans un desdits éléments de support et/ou de guidage, ledit rail (102a,102b) présentant :
- une portion de coulissement (1021) sensiblement parallèle audit axe de coulissement ; et
- une portion d'obturation/ouverture (1022) formant un angle avec ladite portion de coulissement (1021), de façon à commander le passage dudit panneau mobile (101) dudit plan de coulissement vers ledit plan défini par le panneau fixe (103), et réciproquement,
ledit patin (104) étant mobile en translation par rapport audit panneau mobile (101), de façon que, dans ladite portion d'obturation/ouverture (1022), ledit panneau mobile (101) reste immobile parallèlement audit axe de coulissement, pendant que ledit patin (104) se décale parallèlement audit plan de coulissement, provoquant un déplacement dudit panneau mobile (101) sensiblement perpendiculaire audit plan de coulissement.

2. Dispositif d'obturation selon la revendication 1, **caractérisé en ce que** ledit rail (102a, 102b) présenté également une portion de verrouillage (1023), s'étendant parallèlement à ladite portion de coulissement (1021), dans le prolongement de ladite portion d'obturation/ouverture (1022), dans laquelle ledit patin (104) peut s'inscrire alors que ledit panneau mobile (101) est en position d'obturation.

3. Dispositif d'obturation selon l'une quelconque des revendications 1 et 2, **caractérisé en ce que** ledit patin (104) est solidarisé audit panneau mobile (101) par l'intermédiaire d'une coulisse sous forme de tige (102) s'étendant parallèlement à ladite portion de verrouillage (1023) et le long de laquelle il peut se déplacer entre deux butées.

4. Dispositif d'obturation selon l'une quelconque des revendications 1 à 3, **caractérisé en ce qu'**il comprend des moyens de rappel (1013) tendant à ramener ledit patin (104) vers ladite portion de coulissement (1021):

5. Dispositif d'obturation selon la combinaison des revendications 4 et 3, **caractérisé en ce que** lesdits moyens de rappel comprennent un ressort (1013) monté sur ladite tige (102).

6. Dispositif d'obturation selon l'une quelconque des revendications 1 à 5, **caractérisé en ce qu'**au moins un desdits éléments de support et/ou de guidage (102a,102b) porte au moins deux patins de coulissement (104) .

7. Dispositif d'obturation selon l'une quelconque des revendications 1 à 6, **caractérisé en ce qu'**il comprend deux éléments de support et/ou de guidage (102a, 102b) portant chacun au moins un patin de coulissement (104).

8. Dispositif d'obturation selon l'une quelconque des revendications 1 à 7, **caractérisé en ce que** le déplacement dudit panneau mobile (101) est motorisé.

9. Dispositif d'obturation selon la revendication 8, **caractérisé en ce qu'**il comprend des moyens de motorisation (106) agissant sur des moyens de transmission (105) reliés à au moins un desdits patins (104).

10. Dispositif d'obturation selon la revendication 9, **caractérisé en ce que** lesdits moyens de transmission (105) appartiennent au groupe comprenant :
- les câbles ;
- les vis sans fin.

11. Dispositif d'obturation selon la revendication 10, **caractérisé en ce que** les moyens de transmission sont des vis sans fin (105), ladite vis sans fin (105) étant une vis souple.

12. Dispositif d'obturation selon la revendication 11, **caractérisé en ce que** ledit ou lesdits patins (104) sont solidarisés à ladite vis sans fin souple (105) par l'intermédiaire d'une agrafe sertie (1041).

13. Dispositif d'obturation selon l'une quelconque des revendications 8 à 12, **caractérisé en ce que** lesdits moyens de motorisation (106) sont uniques et assurent l'ensemble des déplacements desdits patins (104).

14. Dispositif d'obturation selon la revendication 13, **caractérisé en ce que** lesdits moyens de motorisation (106) sont solidarisés audit ensemble fixe (103).

15. Dispositif d'obturation selon l'une quelconque des revendications 13 et 14, **caractérisé en ce que** lesdits moyens de motorisation (106) sont montés dans et/ou sur un desdits éléments de support et/ou de guidage (102a,102b).

16. Dispositif d'obturation selon l'une quelconque des revendications 1 à 15, **caractérisé en ce que** ledit ensemble fixe (103), ledit panneau mobile (101), le ou lesdits éléments de support et/ou de guidage (102a,102b), le ou lesdits patins (104), les moyens de motorisation (106) éventuels sont assemblés pour former un tout prêt à être rapporté sur une porte ou la carrosserie d'un véhicule.

17. Dispositif d'obturation selon l'une quelconque des revendications 1 à 16, **caractérisé en ce que** ledit panneau mobile (101) porte un cadre (1011) prévu pour recevoir un joint d'étanchéité (1032).

18. Dispositif d'obturation selon l'une quelconque des revendications 1 à 17, **caractérisé en ce que** ledit ensemble fixe (103) est un panneau vitré.

19. Véhicule automobile comprenant au moins un dispositif d'obturation d'une baie (1031) ménagée dans la carrosserie dudit véhicule automobile, comprenant un ensemble fixe (103) et un panneau mobile (101) par rapport audit ensemble fixe (103) monté sur au moins un élément de support et/ou de guidage (102a,102b) de façon à pouvoir coulisser selon un axe de coulissement dans un plan de coulissement sensiblement parallèle au plan défini par ledit ensemble fixe (103) et pouvant venir obturer ou libérer une ouverture ménagée dans ledit ensemble fixe (103), ledit panneau mobile (101) se plaçant en position d'obturation dans ledit plan défini par ledit ensemble fixe (103),
**caractérisé en ce que** le ou lesdits dispositifs d'obturation comprennent au moins un patin de coulissement (104) circulant dans un rail (102a,102b) formé dans un desdits éléments de support et/ou de guidage, ledit rail (102a,102b) présentant:
- une portion de coulissement (1021) sensiblement parallèle audit axe de coulissement ; et
- une portion d'obturation/ouverture (1022) formant un angle avec ladite portion de coulissement (1021), de façon à commander le passage dudit panneau mobile (101) dudit plan de coulissement vers ledit plan défini par le panneau fixe (103), et réciproquement,
ledit patin (104) étant mobile en translation par rapport audit panneau mobile (101), de façon que, dans ladite portion d'obturation/ouverture (1022), ledit panneau mobile (101) reste immobile parallèlement audit axe de coulissement, pendant que ledit patin (104) se décale parallèlement audit plan de coulissement, provoquant un déplacement dudit panneau mobile (101) sensiblement perpendiculaire audit plan de coulissement.

## Claims

1. Device for closing an aperture (1031) provided in the bodywork of a motor vehicle, comprising a fixed assembly (103) and a panel (101) which can be moved relative to the fixed assembly (103) and which is mounted on at least one supporting and/or guiding element (102a, 102b) so as to be able to slide along a sliding axis in a sliding plane substantially parallel with the plane defined by the fixed assembly (103) and being able to close or release an opening provided in the fixed assembly (103), the movable panel (101) being placed in a closure position in the plane defined by the fixed assembly (103),
**characterised in that** it comprises at least one sliding pad (104) which travels in a rail (102a, 102b) formed in one of the supporting and/or guiding elements, the rail (102a, 102b) having:
- a sliding portion (1021) which is substantially parallel with the sliding axis; and
- a closing/opening portion (1022) which forms an angle with the sliding portion (1021) in order to control the movement of the movable panel (101) from the sliding plane towards the plane defined by the fixed panel (103), and vice-versa, the pad (104) being able to be moved in translation relative to the movable panel (101) so that, in the closing/opening portion (1022), the movable panel (101) remains fixed in position parallel with the sliding axis, whilst the pad (104) is displaced parallel with the sliding plane, bringing about a movement of the movable panel (101) substantially perpendicular relative to the sliding plane.

2. Closure device according to claim 1, **characterised in that** the rail (102a, 102b) further comprises a locking portion (1023) which extends parallel with the sliding portion (1021) in continuation of the closing/opening portion (1022) in which the pad (104) can be located when the movable panel (101) is in the closing position.

3. Closure device according to either claim 1 or claim 2, **characterised in that** the pad (104) is fixedly joined to the movable panel (101) by means of a sliding member in the form of a rod (102) which extends parallel with the locking portion (1023) and along which it can move between two stops.

4. Closure device according to any one of claims 1 to 3, **characterised in that** the device comprises return means (1013) which tend to move the pad (104) towards the sliding portion (1021).

5. Closure device according to claims 4 and 3 taken together, **characterised in that** the return means comprise a spring (1013) which is mounted on the rod (102).

6. Closure device according to any one of claims 1 to 5, **characterised in that** at least one of the supporting and/or guiding elements (102a, 102b) carries at least two sliding pads (104).

7. Closure device according to any one of claims 1 to 6, **characterised in that** the device comprises two supporting and/or guiding elements (102a, 102b) which each carry at least one sliding pad (104).

8. Closure device according to any one of claims 1 to 7, **characterised in that** the movement of the movable panel (101) is motorised.

9. Closure device according to claim 8, **characterised in that** the device comprises motorisation means (106) which act on transmission means (105) which are connected to at least one of the pads (104).

10. Closure device according to claim 9, **characterised in that** the transmission means (105) belong to the group comprising:
- cables;
- endless screws.

11. Closure device according to claim 10, **characterised in that** the transmission means are endless screws (105), the endless screw (105) being a flexible screw.

12. Closure device according to claim 11, **characterised in that** the pad(s) (104) is/are fixedly joined to the flexible endless screw (105) by means of a crimped clamp (1041).

13. Closure device according to any one of claims 8 to 12, **characterised in that** the motorisation means (106) are independent and ensure all the movements of the pads (104).

14. Closure device according to claim 13, **characterised in that** the motorisation means (106) are fixedly joined to the fixed assembly (103).

15. Closure device according to either claim 13 or claim 14, **characterised in that** the motorisation means (106) are mounted in and/or on one of the supporting and/or guiding elements (102a, 102b).

16. Closure device according to any one of claims 1 to 15, **characterised in that** the fixed assembly (103), the movable panel (101), the supporting and/or guiding element(s) (102a, 102b), the pad(s) (104), the optional motorisation means (106) are assembled in order to form an assembly which is ready to be fitted to a door or the bodywork of a vehicle.

17. Closure device according to any one of claims 1 to 16, **characterised in that** the movable panel (101) carries a frame (1011) configured to receive a sealing joint (1032).

18. Closure device according to any one of claims 1 to 17, **characterised in that** the fixed assembly (103) is a pane of glass.

19. Motor vehicle comprising at least one device for closing an aperture (1031) provided in the bodywork of the motor vehicle, comprising a fixed assembly (103) and a panel (101) which can be moved relative to the fixed assembly (103) and which is mounted on at least one supporting and/or guiding element (102a, 102b) so as to be able to slide along a sliding axis in a sliding plane which is substantially parallel with the plane defined by the fixed assembly (103) and which can close or release an opening which is provided in the fixed assembly (103), the movable panel (101) being placed in a closure position in the plane defined by the fixed assembly (103),
**characterised in that** the closure device(s) comprise(s) at least one sliding pad (104) which travels in a rail (102a, 102b) formed in one of the supporting and/or guiding elements, the rail (102a, 102b) having:
- a sliding portion (1021) which is substantially parallel with the sliding axis; and
- a closing/opening portion (1022) which forms an angle with the sliding portion (1021) in order to control the movement of the movable panel (101) from the sliding plane towards the plane defined by the fixed panel (103), and vice-versa,
the pad (104) being able to be moved in translation relative to the movable panel (101) so that, in the closing/opening portion (1022), the movable panel (101) remains fixed in position parallel with the sliding axis, whilst the pad (104) is displaced parallel with the sliding plane, bringing about a movement of the movable panel (101) substantially perpendicular relative to the sliding plane.

## Patentansprüche

1. Verschlussvorrichtung einer Türöffnung (1031), die in der Karosserie eines Kraftfahrzeugs eingerichtet ist, die eine stationäre Einheit (103) und eine Tafel (101) aufweist, die in Bezug zu der stationären Einheit (103) beweglich ist, die auf mindestens ein Trag- und/oder Führungselement (102a, 102b) derart montiert ist, dass sie entlang einer Gleitachse in einer Gleitebene im Wesentlichen parallel zu der von der stationären Einheit (103) definierten Ebene gleiten und die in der stationären Einheit (103) eingerichtete Öffnung verschließen oder freigeben kann, wobei sich die bewegliche Tafel (101) in Verschlussposition in der Ebene platziert, die von der stationären Einheit (103) definiert ist,
**dadurch gekennzeichnet, dass** sie mindestens eine Gleitkufe (104) aufweist, die in einer Schiene (102a, 102b), die entweder in dem Trag- und/oder in dem Führungselement ausgebildet ist, zirkuliert, wobei die Schiene (102a, 102b) Folgendes aufweist:
- einen Gleitabschnitt (1021), der im Wesentlichen zu der Gleitachse parallel ist, und
- einen Verschluss-/Öffnungsabschnitt (1022), der einen Winkel mit dem Gleitabschnitt (1021) bildet, so dass das Übergehen der beweglichen Tafel (101) von der Gleitebene zu der Ebene, die von der stationären Tafel (103) definiert wird, gesteuert wird und umgekehrt,
wobei die Kufe (104) in Verschiebung in Bezug zu der beweglichen Tafel (101) derart beweglich ist, dass die bewegliche Tafel (101) in dem Verschluss- und/oder Öffnungsabschnitt (1022) parallel zu der Gleitachse unbewegt bleibt, während sich die Kufe (104) parallel zu der Gleitebene verschiebt und eine Verlagerung der beweglichen Tafel (101) im Wesentlichen senkrecht zu der Gleitebene verursacht.

2. Verschlussvorrichtung nach Anspruch 1, **dadurch gekennzeichnet, dass** die Schiene (102a, 102b) auch einen Verriegelungsteil (1023) aufweist, der sich parallel zu dem Gleitabschnitt (1021) in der Verlängerung des Verschluss-/Öffnungsabschnitts (1022) erstreckt, in die sich die Kufe (104) einfügt, während die bewegliche Tafel (101) in Verschlussposition ist.

3. Verschlussvorrichtung nach einem der Ansprüche 1 und 2, **dadurch gekennzeichnet, dass** die Kufe (104) fest mit der beweglichen Tafel (101) über eine Gleitführung in Schaftform (102) fest verbunden ist, die sich parallel zu dem Verriegelungsabschnitt (1023) erstreckt und entlang welcher sie sich zwischen zwei Anschlägen bewegen kann.

4. Verschlussvorrichtung nach einem der Ansprüche 1 bis 3, **dadurch gekennzeichnet, dass** sie Rückholmittel (1013) aufweist, die tendenziell die Kufe (104) zu dem Gleitabschnitt (1021) zurückholt.

5. Verschlussvorrichtung gemäß der Kombination der Ansprüche 4 und 3, **dadurch gekennzeichnet, dass** die Rückholmittel eine Feder (1013) aufweisen, die auf den Schaft (102) montiert ist.

6. Verschlussvorrichtung nach einem der Ansprüche 1 bis 5, **dadurch gekennzeichnet, dass** mindestens entweder das Trag- und/oder das Führungselement (102a, 102b) mindestens zwei Gleitkufen (104) trägt.

7. Verschlussvorrichtung nach einem der Ansprüche 1 bis 6, **dadurch gekennzeichnet, dass** sie zwei Trag- und/oder Führungselemente (102a, 102b) aufweist, die jeweils mindestens eine Gleitkufe (104) tragen.

8. Verschlussvorrichtung nach einem der Ansprüche 1 bis 7, **dadurch gekennzeichnet, dass** die Bewegung der beweglichen Tafel (101) motorisiert ist.

9. Verschlussvorrichtung nach Anspruch 8, **dadurch gekennzeichnet, dass** sie Motorisierungsmittel (106) aufweist, die auf Übertragungsmittel (105), die mit mindestens einer der Kufen (104) verbunden sind, einwirken.

10. Verschlussvorrichtung nach Anspruch 9, **dadurch gekennzeichnet, dass** die Übertragungsmittel (105) zu der Gruppe gehören, die Folgendes umfasst:
- die Kabel;
- die Schnecken.

11. Verschlussvorrichtung nach Anspruch 10, **dadurch gekennzeichnet, dass** die Übertragungsmittel Schnecken (105) sind, wobei die Schnecke (105) eine biegsame Schnecke ist.

12. Verschlussvorrichtung nach Anspruch 11, **dadurch gekennzeichnet, dass** die Kufe oder Kufen (104) mit der biegsamen Schnecke (105) über eine gefalzte Klammer (1041) fest verbunden sind.

13. Verschlussvorrichtung nach einem der Ansprüche 8 bis 12, **dadurch gekennzeichnet, dass** die Motorisierungsmittel (106) einheitlich sind und alle Bewegungen der Kufen (104) sicherstellen.

14. Verschlussvorrichtung nach Anspruch 13, **dadurch gekennzeichnet, dass** die Motorisierungsmittel (106) fest mit der stationären Einheit (103) verbunden sind.

15. Verschlussvorrichtung nach einem der Ansprüche 13 und 14, **dadurch gekennzeichnet, dass** die Motorisierungsmittel (106) in und/oder auf entweder das Trag- und/oder das Führungselement (102a, 102b) montiert sind.

16. Verschlussvorrichtung nach einem der Ansprüche 1 bis 15, **dadurch gekennzeichnet, dass** die stationäre Einheit (103), die bewegliche Tafel (101) und das oder die Trag- und/oder Führungselemente (102a, 102b), die Kufe oder die Kufen (104), die eventuellen Motorisierungsmittel (106) zusammengefügt sind, um ein fertiges Ganzes zu bilden, das auf eine Tür oder die Karosserie eines Fahrzeugs angebaut wird.

17. Verschlussvorrichtung nach einem der Ansprüche 1 bis 16, **dadurch gekennzeichnet, dass** die bewegliche Tafel (101) einen Rahmen (1011) trägt, der vorgesehen ist, um eine Dichtung (1032) zu erhalten.

18. Verschlussvorrichtung nach einem der Ansprüche 1 bis 17, **dadurch gekennzeichnet, dass** die stationäre Einheit (103) eine Glasscheibe ist.

19. Kraftfahrzeug, das mindestens eine Verschlussvorrichtung einer Öffnung (1031) aufweist, die in der Karosserie des Kraftfahrzeugs eingerichtet ist, die eine stationäre Einheit (103) und eine Tafel (101) aufweist, die in Bezug zu der stationären Einheit (103) beweglich ist, die auf mindestens ein Trag- und/oder Führungselement (102a, 102b) derart montiert ist, dass sie entlang einer Gleitachse in einer Gleitebene gleiten kann, die im Wesentlichen zu der Ebene parallel ist, die von der stationären Einheit (103) definiert wird, und eine Öffnung verschließen oder freigeben kann, die in der stationären Einheit (103 eingerichtet ist, wobei sich die bewegliche Tafel (101) in Verschlussposition in der von der stationären Einheit (103) definierten Ebene platziert,
**dadurch gekennzeichnet, dass** das Verschlusselement oder die Verschlusselemente mindestens eine Gleitkufe (104) aufweisen, die in einer Schiene (102a, 102b) läuft, die in dem Trag- und/oder dem Führungselement ausgebildet ist, wobei die Schiene (102a, 102b) Folgendes aufweist:
- einen Gleitabschnitt (1021), der zu der Gleitachse im Wesentlichen parallel ist, und
- einen Verschluss-/Öffnungsabschnitt (1022), der mit dem Gleitabschnitt (1021) einen Winkel derart bildet, dass der Übergang der beweglichen Tafel (101) von der Gleitebene zu der Ebene, die von der stationären Tafel (103) definiert wird, gesteuert wird und umgekehrt,
wobei die Kufe (104) in Verschiebung in Bezug zu der beweglichen Tafel (101) in dem Verschluss-/Öffnungsabschnitt (1022) parallel zu der Gleitachse unbewegt bleibt, während sich die Kufe (104) parallel zu der Gleitebene verschiebt und eine Verlagerung der beweglichen Tafel (101) im Wesentlichen senkrecht zu der Gleitebene verursacht.
